# EUROPÄISCHE PATENTSCHRIFT

(11) **EP 1 236 401 B1**
(45) Veröffentlichungstag und Bekanntmachung des Hinweises auf die Patenterteilung: **19.11.2003**
(21) Anmeldenummer: 02003069.8
(22) Anmeldetag: 13.02.2002
(51) Int. Cl.: A22B 5/20

(54) **Einrichtung und Verfahren zum Entfernen der Wirbelsäule aus Schlachttierkörpern**
Device and method for separating the spinal column of slaughtered animals
Dispositif et procédé pour prélever la colonne vertébrale d'animaux abattus

(30) Priorität: 19.02.2001 DE 10107978; 22.08.2001 DE 10141137
(43) Veröffentlichungstag der Anmeldung: 04.09.2002
(73) Patentinhaber: BVS Beratung-Verkauf-Service für die Fleischwirtschaft GmbH, 55270 Ober-Olm (DE)
(72) Erfinder: Krause, Georg, 31141 Hildesheim (DE); Wolf, Karlheinz, Dr., 06193 Sennwitz (DE); Grosse, Hartmut, 06193 Nauendorf (DE)
(74) Vertreter: Leinung, Günter

(56) Entgegenhaltungen:
- EP-A- 0 867 118
- WO-A-97/39634
- WO-A-99/38384
- US-A- 4 637 140

## Beschreibung

Die Erfindung betrifft eine Einrichtung und ein Verfahren zum Entfernen der Wirbelsäule aus Schlachttierkörpern, insbesondere für Rinder nach dem Oberbegriff des Anspruchs 1.

Die bisherigen Methoden der Schlachtung und der Zerlegung von Schlachttierkörpern gehen davon aus, dass die Schlachttierkörper nach der Tötung auf Transporteinrichtungen verbracht und dann taktweise zu den einzelnen Arbeitsplätzen geführt werden, um die jeweils notwendigen Arbeitsschritte realisieren zu können.
Dabei war es bisher üblich, dass aus den Schlachttierkörpern, so auch aus Rindern, nach dem Öffnen des Bauchbereiches die Innereien entnommen und die Schlachttierkörper dann mittig der Wirbelsäule getrennt werden.
Dazu werden vorrangig manuell geführte Bügelbandsägen oder Kreissägen als Bestandteil eines Trennautomaten verwendet.

Aufgrund der in der letzten Zeit verstärkt auftretenden Erkrankungen an Rindern (BSE) macht es sich erforderlich, nach neuen Methoden und Einrichtungen der Schlachtung und Zerlegung von Schlachttierkörpern, insbesondere von Rindern, zu suchen. Dies unter dem Gesichtspunkt, dass bei der Teilung von Rinderkörpern die Wirbelsäule nicht mehr beschädigt wird.

Die EP 0 867 118 B1 bezieht sich auf eine Einrichtung zum Entnehmen der Wirbelsäule aus Schlachttierkörpern und ist in Form eines Handgerätes ausgebildet, welches einen internen Antrieb besitzt und mit einer Schneideinrichtung in Form einer Bandsäge ausgebildet ist. Die Bandsäge wird durch ein endloses Band gebildet, welches einseitig auf ihren Stirnseiten mit Zähnen versehen ist, die eine gezahnte Klinge ergeben. Der Antrieb der Klinge/des endlosen Bandes erfolgt über eine in der Einrichtung vorgesehene Antriebskammwalze, die mit der Verzahnung der Bandsäge, gegenüber der Klinge vorgesehen, in Eingriff steht und so die Bandsäge mit Klinge in eine umlaufende Bewegung versetzt. Die Bandsäge selbst ist in ihrer Form oval ausgebildet. Die gesamte Einrichtung wird entlang der Wirbelsäule geführt, und mittels der umlaufenden Bandsäge soll die Wirbelsäule ohne Verletzung derselben aus dem Schlachttierkörper entfernt werden.
Nachteilig bei dieser Einrichtung ist, dass dieselbe bei ihrem Einsatz im weitesten Sinne frei Hand geführt werden muss, somit nicht ausgeschlossen ist, dass beim Heraustrennen der Wirbelsäule es zu Beschädigung derselben kommt, dies mit der Folge, dass der gesamte Schlachttierkörper nicht mehr seiner weiteren Verwendung zugeführt werden kann.

Der Erfindung liegt daher die Aufgabe zugrunde, eine Einrichtung und ein Verfahren zum Entfernen der Wirbelsäule aus Schlachttierkörpern, insbesondere aus Rindern, zu entwickeln, mit der die Wirbelsäule ohne ihre Beschädigung aus dem Schlachttierkörper entfernt werden kann, dies bei einer exakten Führung der Einrichtung entlang der zu entfernenden Wirbelsäule und unter Beachtung der Hygiene- und Gesundheitsvorschriften sowie der Vielfachverwendung der Einrichtung.

Erfindungsgemäß wird die Aufgabe mit den Merkmalen des Anspruchs 1 gelöst.

Besondere Ausgestaltungen und vorteilhafte Lösungen sind Gegenstand der Unteransprüche.

So wurde eine Einrichtung zum Entfernen der Wirbelsäule aus Schlachttierkörpern geschaffen, mit der die Wirbelsäule in ihrer Gesamtheit, ohne dass die Wirbelsäule beschädigt wird, aus dem Schlachttierkörper entfernt werden kann. Die Einrichtung arbeitet dabei auf der Grundlage eines angetriebenen Schneidwerkzeuges, welches so zur Wirbelsäule positionierbar ist, dass das Schneidwerkzeug die Wirbelsäule umfänglich umschließt, entlang des Wirbelsäulenverlaufes geführt wird und die Wirbelsäule im weitesten Sinne ausschält.
Dabei ist das Schneidwerkzeug als ein ringförmig ausgebildetes Schneidelement ausgeführt, welches antreibbar ist, eine umlaufende Bewegung ausführt und stirnseitig mit Schneidklingen oder Schneidelementen ausgebildet ist. Das Schneidwerkzeug ist dabei wesentliches Funktionsmerkmal der Einrichtung, die als ein Handgerät ausgebildet ist, welches durch den jeweiligen Bedienenden in Funktion gesetzt wird. Die Führung der Einrichtung erfolgt durch den Bedienenden, wobei die Einrichtung zusätzlich über einen Seilzug gehalten wird, so dass der Bedienende seine gesamte Aufmerksamkeit auf die Führung der Einrichtung und somit auf ein sachgerechtes Herausschälen der Wirbelsäule richten kann.

Dies wird noch dadurch unterstützt, dass die Einrichtung im Bereich des Schneidwerkzeuges mit Führungs- und Transporträdern ausgebildet ist, die seitlich des Schneidwerkzeuges angeordnet sind und gleichfalls über den zentralen Antrieb der Einrichtung angetrieben werden.
Zwischen den beiden Führungs- und Transporträdern ist die Einrichtung im Frontbereich mit einer Führung ausgebildet, welche eine gekrümmte Form besitzt und beim Schneidvorgang unmittelbar an der Oberfläche der herauszuschälenden Wirbelsäule entlanggleitet, somit die Funktion der Führung der Wirbelsäule und somit der genauen Positionierung der Einrichtung zur Wirbelsäule gewährleistet und andererseits auch eine Schutzfunktion ausübt, indem der Schneidebereich in der Richtung des Bedienenden abgeschirmt ist.

Die vorgesehenen Führungs- und Transporträder sind mit entsprechenden Verzahnungen ausgebildet, die seitlich der Wirbelsäule in den Schlachttierkörper eingreifen, somit die Einrichtung zur Wirbelsäule positionieren und gleichzeitig den Transport der Einrichtung unterstützen. Dies wird dadurch realisiert, dass die beiden Führungs- und Transporträder umlaufen und somit einen Vorschub der Einrichtung bewirken.

In einer bevorzugten Ausführung können die Führungs- und Transporträder auch als Schneidwerkzeuge ausgebildet sein, dies kann erfolgen über die Ausgestaltung der Führungs- und Transporträder selbst oder durch die Anordnung von je einem Schneidmesser, welches auf der Achse des jeweiligen Führungs- und Transportrades angeordnet ist und somit auch angetrieben wird.

Zu der Erfindung gehört auch, dass das Schneidwerkzeug über eine Schnellwechseleinrichtung zur Einrichtung verspannt ist, somit in sehr kurzer Zeit das Schneidwerkzeug nach jedem Gebrauch ausgewechselt und desinfiziert werden kann. Vorteilhafterweise sind die Schneidwerkzeuge in verschiedenen Größen ausgebildet und so der herauszulösenden Wirbelsäule anpassbar.

Neben der Ausbildung der Einrichtung als Handgerät kann diese Einrichtung auch stationär in automatischen Anlagen, in sogenannte Rindertrennautomaten, eingesetzt werden, dies ändert nichts am Funktionsprinzip, da die funktionsbestimmenden Bauteile, die Lagerung und die Antriebe für das Schneidwerkzeug und die Führungs- und Transporträder im weitesten Sinne in Form eines Vorsatzgerätes ausgebildet sind, somit ohne große Anpassarbeiten derartigen Automaten zugeordnet werden kann. Das Verfahren zum Heraustrennen/Herausschälen der Wirbelsäule wird dadurch charakterisiert, dass mit dem Schneidwerkzeug sowohl die Feder als auch die Rippen von der Wirbelsäule abgetrennt werden, dies in schonender und kontinuierlicher Weise, da die vorgesehenen Führungs- und Transporträder sichern, dass das Schneidwerkzeug kontinuierlich längs der Wirbelsäule geführt wird, somit eine Durchsacken von Rippe zu Rippe bzw. von Feder zu Feder verhindert wird, was sich insbesondere positiv auf die Fleischqualität auswirkt.

Mit nachfolgendem Ausführungsbeispiel soll die Erfindung näher erläutert werden.

Die dazugehörige Zeichnung zeigt in
- Figur 1:: eine Seitenansicht der Einrichtung,
- Figur 2:: eine Draufsicht der Seitenansicht,
- Figur 3:: eine perspektivische Darstellung der Einrichtung,
- Figur 4:: eine weitere perspektivische Darstellung der Einrichtung,
- Figur 5:: einen Ausschnitt aus einer Schlachtlinie für Rinder,
- Figur 6:: eine Teilansicht eines geöffneten Rinderkörpers von der Bauchseite gesehen.

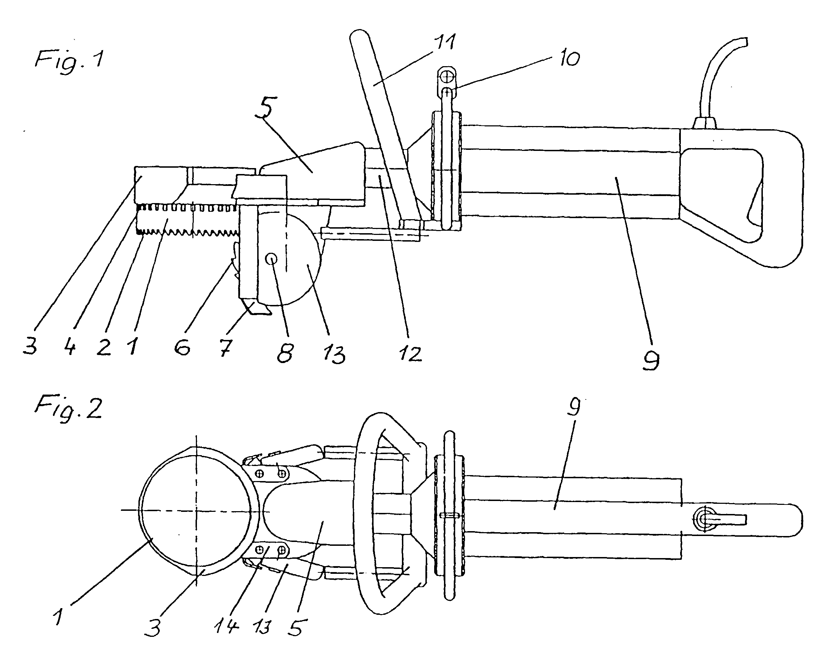

Die Ausbildung der Einrichtung zum Entfernen der Wirbelsäule ergibt sich aus den Darstellungen der Figuren 1 und 2, welche die Einrichtung in Form eines Handgeräten zeigen.

Bei diesem Handgerät 9 kann es sich um handelsüblich Handgeräte handeln, denen linksseitig die funktionsbestimmenden Elemente der Einrichtung zugeordnet sind. Diese sind im bzw. am Grundkörper 5 gelagert und befestigt. Der Grundkörper 5 ist dabei als eine kompakte Baueinheit ausgebildet, mit dem Antriebselement 12 des Handgerätes auswechselbar verbunden und so gestaltet, dass in seinem Inneren die Übertragungs- und Antriebselemente für das Schneidwerkzeug 1 sowie für die Führungs- und Transporträder 6 vorgesehen sind.
Das Schneidwerkzeug 1 ist dabei in einer Aufnahme 3 führend gelagert, welche über eine Befestigung 14 zum Grundkörper 5 verbunden ist. Die Aufnahme 3 ist der Form des Schneidwerkzeuges 1 angepasst und somit kreisförmig oder annähernd kreisförmig ausgebildet. Über eine nicht näher dargestellte Lagerungs- und Wechseleinrichtung ist das Schneidwerkzeug 1 in der Aufnahme 3 drehbeweglich gelagert. Zu seinem Antrieb ist das Schneidwerkzeug 1 umfangseitig mit Zahneingriffsöffnungen 4 ausgebildet, in die das im Grundkörper 5 vorgesehene Antriebsritzel eingreift und das Schneidwerkzeug 1 in eine umlaufenden Drehbewegung versetzt.
Die Zahneingriffsöffnungen 4 sind vorzugsweise mittig des Schneidwerkzeuges 1 vorgesehen, und der obere Bereich des Schneidwerkzeuges 1 dient zu dessen Aufnahme und Befestigung in der Aufnahme 3. Auf der gegenüberliegenden Stirnseite des Schneidwerkzeuges 1 sind die Schneiden 2 herausgebildet, die sägezahnförmig gestaltet sind.
Neben der unmittelbaren Herausbildung der Schneiden 2 in der dargestellten und beschriebenen Art und Weise, können die Schneiden 2 auch als separate Teile ausgebildet sein, welche dann zum Schneidwerkzeug 1 befestigt werden.
Dies ist eine Alternativlösung, vorteilhaft ist die Ausbildung des Schneidwerkzeuges 1 mit den stirnseitig vorgesehenen Schneiden 2.

Durch die vorgesehene Schnellwechseleinrichtung für das Schneidwerkzeug 1 sind die Voraussetzungen geschaffen, dass den hygienischen Forderungen entsprochen wird, da nach jedem Schneidvorgang das Schneidwerkzeug 1 ausgewechselt werden kann.

Aus den Darstellungen nach den Figuren 1 und 2 ergeben sich ferner die An- und Zuordnung der Führungs- und Transporträder 6 als auch die Handhabung des Handgerätes 9.
Die Führungs- und Transporträder 6 sind seitlich zum Grundkörper 5 angeordnet und in Lagern 8 drehbeweglich gelagert. Zum Schutz sind die Führungs- und Transporträder 6 mit Abdeckungen 13 ausgebildet, wobei die Abdeckungen 13 in Arbeitsrichtung mit Öffnungen ausgebildet sind, so dass die Führungs- und Transporträder 6 diese durchgreifen.
Die Anordnung und Lagerung der Führungs- und Transporträder 6 erfolgt unter einer bestimmten Winkelstellung, so dass beim funktionsgemäßen Einsatz der Einrichtung die Führungs- und Transporträder 6 seitlich der Wirbelsäule am Schlachttierkörper anliegen und entlang der Wirbelsäule verlaufen.

Das Handgerät 9 ist zu seiner Handhabung neben dem handelsüblichen Handgriff mit einem weiteren Handgriff 11 ausgebildet, so dass bei seiner Benutzung eine sichere Handhabung und Führung des Handgerätes 9 gewährleistet ist. Über eine vorgesehene Halterung 10 besteht die Möglichkeit, das Handgerät 9 zusätzlich zu stützen bzw. zu halten, dies erfolgt vorzugsweise über einen Seilzug, welcher mit einer Rückholeinrichtung ausgebildet ist, so dass auch gesichert ist, dass beim Einsatz des Handgerätes 9 dieser Seilzug nicht störend wirkt, sondern seiner Funktion des Haltens des Handgerätes gerecht wird.

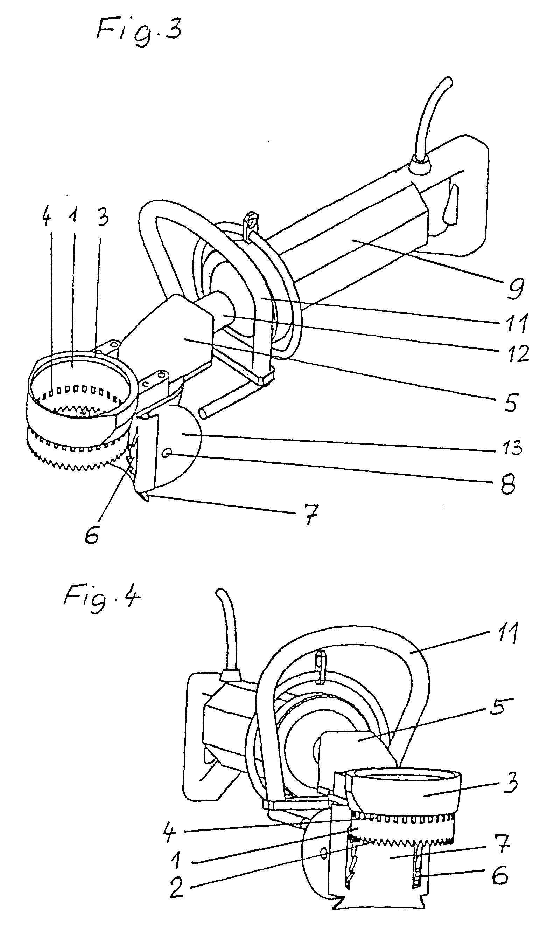

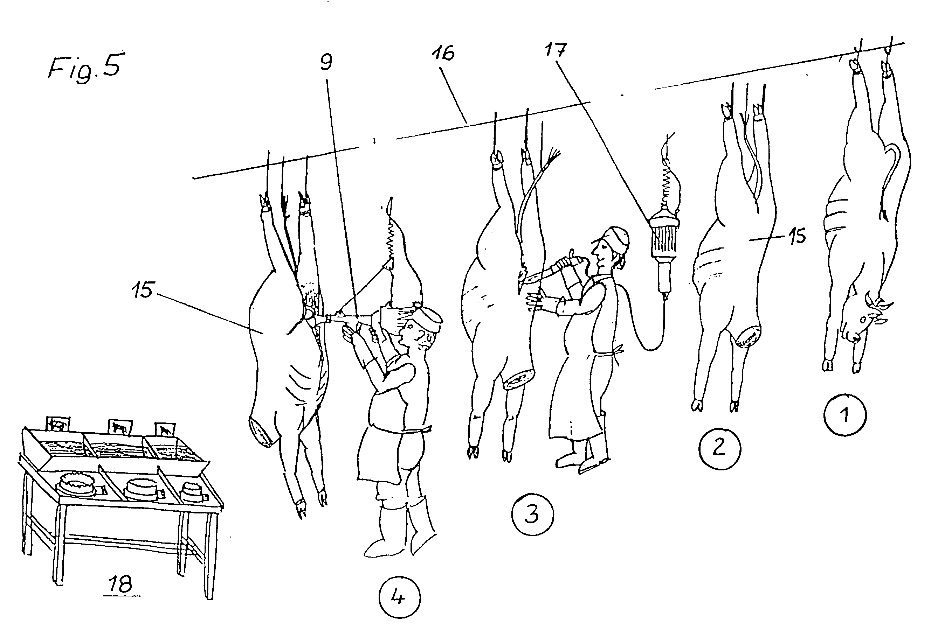

Die perspektivischen Ansichten des Handgerätes 9 in den Figuren 3 und 4 verdeutlichen dessen Ausbildung und die Zu- und Anordnung der funktionsbestimmenden Elemente der Einrichtung. Aus der Figur 4 ergibt sich, dass zwischen den Führungs- und Transporträdern 6 und hinter dem Schneidwerkzeug 1 eine Führung 7 vorgesehen ist, die sich längenmäßig über die Führungs- und Transporträder 6 hinaus erstreckt. Die Führung ist gewölbt ausgebildet, somit der Form der Wirbelsäule angepasst und besitzt ferner Durchtrittöffnungen, die von den Führungs- und Transporträdern 6 durchgriffen werden. Diese Führung 7 erfüllt somit zwei Funktionen. Zum einen deckt sie den Schneid- und Transportbereich ab und zum anderen gewährleistet sie eine zusätzliche Führung des gesamten Handgerätes 9, indem sie an der herauszuschälenden Wirbelsäule anliegt und somit das Schneidwerkzeug 1 zu der Wirbelsäule führend positioniert.

Somit wird sichergestellt, dass die Wirbelsäule ohne Beschädigungen aus dem Schlachttierkörper entfernt werden kann, und ein weiterer Vorteil des Handgerätes 9 besteht darin, dass durch die Ausbildung und Anordnung des Schneidwerkzeuges 1 als ein Schneidkopf dieser nach jedem Gebrauch oder nach Bedarf kurzfristig ausgewechselt und gleichzeitig durch einen desinfizierten Schneidkopf ersetzt werden kann.

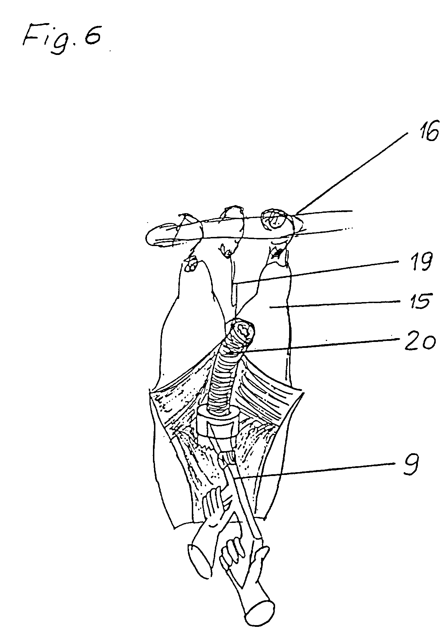

Die einzelnen Arbeits- und Verfahrensschritte zum Herausschälen der Wirbelsäule 20 ist in den Figuren 5 und 6 gezeigt, wobei in der Figur 5 nur ein Ausschnitt einer Schlachtlinie dargestellt ist, nämlich die einzelnen Positionen für das Herausschälen der Wirbelsäule 20.

Position 1 zeigt die Vorbereitung des Schlachttierkörpers 15, welcher an den Hinterfersen aufgehängt und auf einer Transportbahn 16 entlanggleitet. Die 2. Position zeigt bereits, dass das Rind/der Schlachttierkörper 15 enthäutet und vom Kopf befreit wurde, und in der 3. Position ist gezeigt, wie die Rückseite des Schlachttierkörpers 15 mittels eines Schneidwerkzeuges geöffnet wird. Dies erfolgt durch ein geführtes angetriebenes Schneidwerkzeug, dessen Antriebseinheit 17 im unmittelbaren Arbeitsbereich der Position 3 vorgesehen ist. Dieses Freischneiden im Rückenbereich ist nicht zwingend erforderlich, denn auch ohne des Freischneidens oder Öffnens des Rückens kann mit dem Handgerät 9 die Wirbelsäule 20 aus dem Schlachttierkörper 15 entnommen werden, was den Vorteil hat, dass der Schlachttierkörper 15 in sich eine höhere Stabilität erhält und somit nicht die Fleischfasern zusätzlich gestreckt werden.
Die Position 4 zeigt, dass der Schlachttierkörper 15 mit der Bauchseite zum Arbeiter gerichtet ist und der Arbeiter nun in dieser Position das Handgerät 9 zur Wirbelsäule 20 positioniert und diese aus dem Schlachttierkörper 15 herausschält. Die Ausführung dieser Arbeit erfolgt unter Zuhilfenahme eines nicht näher dargestellten Hubpodestes, auf dem der Arbeiter steht und durch die vertikale Bewegungen des Hubpodestes die Höhenunterschiede ausgeglichen werden. Auch hier ist es von Vorteil, die beiden Hälften des Schlachttierkörpers 15 durch zusätzliche Trageketten an der Transportbahn 16 zu befestigen, somit ein Strecken der Schlachttierkörper 15 und somit des Fleisches weitestgehend zu verhindern.
Gezeigt ist auch, dass das Handgerät 9 über einen Seilzug zusätzlich geführt und gehalten wird. In diesem Bereich befindet sich unmittelbar ein Ablagetisch 18, welcher als Reinigungs- und Desinfektionseinheit ausgebildet ist. Wird der auszuwechselnde Schneidkopf bzw. das Schneidwerkzeug 1 aus dem Handgerät 9 entnommen, wird dieser auf dem Ablagetisch 18 abgelegt, gereinigt und desinfiziert, und ein bereits vorbehandeltes Schneidwerkzeug 1/Schneidkopf kann für den nächsten Ausschälvorgang in das Handgerät 9 eingesetzt werden.

In der Position 3 befindet sich der Schlachttierkörper 15 mit seiner Rückseite zum Arbeiter. In dieser Position erfolgt ein Vorschneiden rückseitig (dorsal) entlang der Wirbelsäule 20. Nach diesem Vorschneiden der Wirbelsäule 20 wird der Schlachttierkörper 15 über eine in der Transportbahn 16 vorgesehenen Wendevorrichtung um 180° gedreht, so dass die Bauchseite zum Arbeiter zeigt. In dieser Position 4 ist bereits die Bauchseite (ventral) vollständig geöffnet, so dass der Vorgang des Ausschälens der kompletten Wirbelsäule 20 erfolgen kann. Dies erfolgt, wie bereits beschrieben, mittels des zum Einsatz kommendes Handgerätes 9, welches von oben nach unten durch den Schlachttierkörper 15 geführt wird.
Um eine störungsfreies und qualitätsgerechtes Ausschälen der Wirbelsäule 20 aus dem Schlachttierkörper 15 zu sichern, wird die Wirbelsäule 20, sobald diese einige Zentimeter freigeschnitten bzw. ausgeschält ist, Figur 6, zusätzlich gehalten und verspannt. Dies geschieht über einen Seilzug 19, welcher gleichfalls auf der Transportbahn 16 aufgehängt und auf dieser verfahrbar ist. Ist die Wirbelsäule 20 vollständig aus dem Schlachttierkörper 15 herausgeschält, kann über diesen Seilzug 19 die Wirbelsäule 20 aus der Schlachtlinie abtransportiert werden.
Der Schlachttierkörper 15 wird auf der Transportbahn 16 zur nächsten Position gebracht, und der Arbeiter hat nun genügend Freiraum und Zeit, den Wechsel des Schneidwerkzeuges vorzunehmen.

## Patentansprüche

1. Einrichtung zum Entfernen der Wirbelsäule aus Schlachttierkörpern, insbesondere aus Rindern, die mit einem umlaufenden Schneidwerkzeug ausgebildet und Bestandteil eines Handgerätes ist, **dadurch gekennzeichnet, dass**
das umlaufende Schneidwerkzeug (1) in einer Aufnahme (3) drehbeweglich gelagert und umfangsseitig mit Zahneingriffsöffnungen (4) aufgebildet ist, wobei die Aufnahme (3) am Grundkörper (5) befestigt und der Grundkörper (5) auswechselbar zum Antriebselement (12) verbunden ist und dem Grundkörper (5) beidseitig je ein Führungs- und Transportrad (6) und mittig eine Führung (7) zugeordnet sind.

2. Einrichtung nach Anspruch 1, **dadurch gekennzeichnet, dass**
die Führungs- und Transporträder (6) und das Schneidwerkzeug (1) über das Antriebselement (12) angetrieben werden, im Grundkörper (5) ein Ritzel vorgesehen ist, welches über die Zahneingriffsöffnungen (4) mit dem Schneidwerkzeug (1) in Wirkverbindung steht und das Schneidwerkzeug (1) auf einer seiner Stirnseiten mit Schneiden ausgeführt ist.

3. Einrichtung nach einem der Ansprüche 1 und 2, **dadurch gekennzeichnet, dass**
die Führungs- und Transporträder (6) schräg, einen spitzen Winkel bildend, am Grundkörper (5) befestigt sind und Öffnungen der Führung (7) durchgreifen, bedienseitig von einer Abdeckung umgeben sind und seitlich der Wirbelsäule (20) auf dem Schlachttierkörper (15) zur Auflage kommen.

4. Einrichtung nach einem der Ansprüche 1 bis 3, **dadurch gekennzeichnet, dass**
den Führungs- und Transporträdem (6) Schneiden in Form von umlaufenden Messern zuordbar sind.

5. Einrichtung nach einem der Ansprüche 1 bis 4, **dadurch gekennzeichnet, dass**
das Schneidwerkzeug (1) kreisförmig ausgebildet und die Schneiden (2) als Schneidezähne ausgeführt sind, wobei vorzugsweise die Schneiden (2), als einzelne Elemente ausgebildet, am Schneidwerkzeug (1) befestigbar, sind.

6. Einrichtung nach einem der Ansprüche 1 bis 5, **dadurch gekennzeichnet, dass**
die auswechselbaren Funktionselemente der Einrichtung als ein Schneidkopf ausgebildet sind.

7. Einrichtung nach einem der Ansprüche 1 bis 6, **dadurch gekennzeichnet, dass**
der Grundkörper (5) mit seinen zugeordneten Bauelementen in einer Schlachtlinie einer automatischen Einrichtung, beispielsweise einem Rindertrennautomaten, zum Herausschälen der Wirbelsäule (20) Aufnahme findet.

8. Einrichtung nach einem der Ansprüche 1 bis 7, **dadurch gekennzeichnet, dass**
die Führungs- und Transporträder (6) der Schneidrichtung des Schneidwerkzeuges (1) entgegengerichtet umlaufen.

9. Verfahren zum Entfernen der Wirbelsäule aus Schlachttierkörpern unter Verwendung der Einrichtung nach einem der vorangehenden Ansprüche, **dadurch gekennzeichnet, dass**
das Handgerät (9) von oben nach unten, in Richtung des Kopfes, entlang der Wirbelsäule (20) geführt wird, das Schneidwerkzeug (1) die Wirbelsäule (20) umfänglich aus dem Schlachttierkörper (15) ausschält, dabei die Federn und Rippen stoßfrei abtrennt und die Einrichtung in kontinuierlicher Weise am Schlachttierkörper (20) abwärts über die Führungen (7) und die Führungs- und Transporträder (6) geführt und transportiert wird.

10. Verfahren nach Anspruch 9, **dadurch gekennzeichnet, dass**
die Wirbelsäule (20) während ihrer Entfernung über einen Seilzug (19) gehalten wird.

## Claims

1. Equipment for the removal of the spinal column from slaughtered animal bodies, especially from cattle, which is equipped with a rotating cutting tool and constitutes a component part of a manual device, **characterized by** the fact that
the rotating cutting tool (1 ) is supported in an incorporating unit (3) which enables the rotational movement and is fitted around the circumference with meshing openings (4), with the incorporating unit (3) being attached to the basic body (5) and the basic body being connected with the drive element (12) in an exchangeable manner and the basic body (5) featuring a guiding wheel as well as a transport wheel (6) on each of the two sides and a guide (7) in the centre.

2. Equipment according to claim 1, **characterized by** the fact that
the guiding and transport wheels (6) and the cutting tool (1 ) are driven via the drive element (12), that a pinion is provided at the basic body (5), which is interlinked with the cutting tool (1 ) via the meshing openings (4) and that the cutting tool (1 ) is equipped with cutting blades on one of the front ends.

3. Equipment according to one of claims 1 to 2, **characterized by** the fact that
the guiding and transport wheels (6) are attached to the basic body (5) in an inclined manner, forming an acute angle, and reach through the openings of the guide (7), that they are guarded by a cover on the operator's side and are positioned to the side of the spinal column of the slaughtered animal body (15).

4. Equipment according to one of claims 1 to 3, **characterized by** the fact that
the guiding and transport wheels (6) are assigned to cutting blades in the form of rotating knives.

5. Equipment according to one of claims 1 to 4, **characterized by** the fact that
the cutting tool (1 ) is of circular shape and that the cutting blades (2) are formed as cutting teeth, with the cutting blades (2) formed as individual elements, being preferably attachable to the cutting tool (1 ).

6. Equipment according to one of claims 1 to 5, **characterized by** the fact that
the exchangeable functional elements of the equipment constitute a cutting head.

7. Equipment according to one of claims 1 to 6, **characterized by** the fact that
the basic body (5) with its assigned components is part of a slaughtering line of an automatic facility, for example an automatic cattle cutting machine, for carving out the spinal column (20).

8. Equipment according to one of claims 1 to 7, **characterized by** the fact that
the guiding and transport wheels (6) rotate in the opposite direction of the cutting direction of the cutting tool (1 ).

9. Procedure for the removal of the spinal column from slaughtered animal bodies, using the equipment according to one of the above stated claims, **characterized by** the fact that
the manual device (9) is guided along the spinal column (20) from top to bottom, in the direction of the head, that the cutting tool (1) carves out the spinal column (20) around its circumference from the slaughtered animal body (15), that by doing so it separates the spinous process and the ribs smoothly and that the equipment is guided and transported down the slaughtered animal body (20) in a continual manner via the guides (7) and the guiding and transport wheels (6).

10. Procedure according to claim 9, **characterized by** the fact that
the spinal column (29) is held by a rope pull (19) during its removal.

## Revendications

1. Dispositif destiné à l'extraction de la colonne vertébrale des corps d'animaux de boucherie, en particulier des bovins, constitué par un outil de coupe rotatif et faisant partie d'un appareil manuel, **caractérisé en ce que**
l'outil de coupe rotatif (1) est logé dans un dispositif porte-outil (3) de façon à pouvoir tourner et est réalisé, sur sa circonférence, avec des ouvertures d'engrènement des dents (4), le dispositif porte-outil (3) étant fixé au châssis de base (5) et le châssis de base (5) étant relié de façon interchangeable à l'élément d'entraînement (12) et, des deux côtés, à chaque fois une roue de guidage et une roue de transport (6) et, au centre, un dispositif de guidage (7) étant affectés au châssis de base (5).

2. Dispositif selon la revendication 1, **caractérisé en ce que**
les roues de guidage et de transport (6) et l'outil de coupe (1) sont entraînés par l'élément d'entraînement (12), que, dans le châssis de base (5), un pignon est prévu, qui, à travers les ouvertures d'engrènement des dents (4), est en relation effective avec l'outil de coupe (1), et que l'outil de coupe (1) est pourvu, sur l'un de ses bouts, des arêtes de coupe.

3. Dispositif selon l'une des revendications 1 et 2, **caractérisé en ce que**
les roues de guidage et de transport (6) sont fixées obliquement au châssis de base (5) de manière à former ainsi un angle aigu et passent à travers les ouvertures du dispositif de guidage (7), sont entourées, sur le côté de commande, d'un couvercle et sont posées latéralement par rapport à la colonne vertébrale (20) sur le corps de l'animal de boucherie (15).

4. Dispositif selon l'une des revendications 1 à 3, **caractérisé en ce que**
des arêtes de coupe sous la forme de couteaux rotatifs peuvent être affectées aux roues de guidage et de transport (6).

5. Dispositif selon l'une des revendications 1 à 4, **caractérisé en ce que**
l'outil de coupe (1) est réalisé sous forme circulaire et les arêtes de coupe (2) sont conçues comme des dents tranchantes, les arêtes de coupe (2), conçues comme éléments séparés, pouvant de préférence être fixées à l'outil de coupe (1).

6. Dispositif selon l'une des revendications 1 à 5, **caractérisé en ce que**
les éléments fonctionnels interchangeables du dispositif sont conçus comme tête de coupe.

7. Dispositif selon l'une des revendications 1 à 6, **caractérisé en ce que**
le châssis de base (5) avec ses éléments est intégré dans une ligne d'abattage d'une installation automatique, par exemple dans un appareil automatique de découpe des bovins, afin d'en extraire la colonne vertébrale (20).

8. Dispositif selon l'une des revendications 1 à 7, **caractérisé en ce que**
les roues de guidage et de transport (6) tournent dans le sens inverse du sens de coupe de l'outil de coupe (1 ).

9. Procédé destiné à enlever la colonne vertébrale des corps d'animaux de boucherie en utilisant le dispositif selon l'une des revendications précédentes, **caractérisé en ce que**
l'appareil manuel (9) est mené de haut en bas, vers la tête, le long de la colonne vertébrale (20), l'outil de coupe (1) extrait, du corps de l'animal de boucherie (15), la colonne vertébrale (20), le long de sa circonférence, en coupant sans chocs les côtes plates et les côtes et le dispositif est guidé et transporté en descendant le long du corps de l'animal de boucherie (20), par les dispositifs de guidage (7) et les roues de guidage et de transport (6).

10. Procédé selon la revendication 9, **caractérisé en ce que**
la colonne vertébrale (20) est maintenue, au cours de son extraction, par un treuil à câble (19).
